# EUROPÄISCHE PATENTSCHRIFT

(11) **EP 0 855 098 B1**
(45) Veröffentlichungstag und Bekanntmachung des Hinweises auf die Patenterteilung: **14.07.1999**
(21) Anmeldenummer: 96934554.5
(22) Anmeldetag: 07.10.1996
(51) Int. Cl.: H02J 9/06

(54) **ANORDNUNG ZUR UNTERBRECHUNGSFREIEN STROMVERSORGUNG ELEKTISCHER VERBRAUCHER**
ARRANGEMENT FOR ENSURING UNINTERRUPTED CURRENT SUPPLY TO AN ELECTRICAL CONSUMER
DISPOSITIF ASSURANT UNE ALIMENTATION ININTERROMPUE DE COURANT A UN CONSOMMATEUR ELECTRIQUE

(30) Priorität: 14.10.1995 DE 19538381
(43) Veröffentlichungstag der Anmeldung: 29.07.1998
(73) Patentinhaber: AEG Energietechnik GmbH, 60528 Frankfurt (DE)
(72) Erfinder: KOHLSTRUCK, Bernd, D-61267 Neu Anspach (DE); BERG, Norbert, D-64295 Darmstadt (DE)
(74) Vertreter: Dreiss, Fuhlendorf, Steimle & Becker, Patentanwälte
(86) Internationale Anmeldenummer: EP9604340
(87) Internationale Veröffentlichungsnummer: WO9715106

(56) Entgegenhaltungen:
- EP-A- 0 018 521
- GB-A- 2 190 551
- US-A- 4 471 233
- US-A- 5 081 367
- US-A- 5 138 185
- NTT REVIEW, Bd. 6, Nr. 2, 1.März 1994, Seiten 47-53, XP000446893 ASANO N ET AL: "THE FUTURE OF OUR FUEL CELL TOTAL ENERGY SYSTEM A HIGHLY EFFICIENT AND CLEAN ENERGY SYSTEM"

## Beschreibung

Die Erfindung betrifft eine Anordnung zur unterbrechungsfreien Energieversorgung eines elektrischen Verbrauchers, der mit einem Wechselspannungsnetz und über einen Wechselrichter mit einer Brennstoffzelle gekoppelt ist, wobei die Energieversorgung nach einem Ausfall des Wechselspannungsnetzes durch die Brennstoffzelle erfolgt.

Eine derartige Anordnung ist aus NTT Review, Bd. 6, Nr. 2, 1. März 1994, Seiten 47-53, XP000446893, Asano N et. al.: "The future of our fuel cell total energy system" bekannt. Dort wird eine PAFC-Brennstoffzelle (phosphoric acid fuel cell) im Dauerbetrieb einem Wechselspannungsnetz parallel geschaltet. Fällt das Wechselspannungsnetz aus, so übernimmt die Brennstoffzelle die Energieversorgung.

Eine weitere Anordnung ist aus der DE-PS 16 90 027 bekannt. Bei dieser bekannten Anordnung ist ein erster Gleichrichter an ein Wechselspannungsnetz angeschlossen. Dem Ausgang des Gleichrichters ist ein Kondensator und ein Verbraucher parallel geschaltet. Der Verbraucher ist weiterhin über einen Schalter an eine Brennstoffzelle angeschlossen. Der Brennstoffzelle ist weiterhin der Ausgang eines zweiten Gleichrichters parallel geschaltet, der ebenfalls vom Wechselspannungsnetz gespeist wird. Der zweite Gleichrichter erzeugt eine der Ausgangsspannung der Brennstoffzelle entsprechende Gegenspannung, um den Gasverbrauch der Brennstoffzelle bei intakter Netzspannung möglichst gering zu halten.

Aus dem Buch "Brennstoffelemente", Verlag Chemie GmbH, Weinheim, Bergstraße, 1965, S. 368, ist es bekannt, Brennstoffzellen als Notstromanlagen einzusetzen.

Unterbrechungsfreie Stromversorgungseinrichtungen werden zur Speisung von Verbrauchern eingesetzt, deren Ausfall aufgrund des Wegfalls der Versorgungsspannung zu einer unzulässigen oder unerwünschten Störung eines Betriebsablaufs führt. Manche Betriebsabläufe sind bereits durch Spannungseinbrüche von kurzer Dauer gefährdet. Spannungseinbrüche in einem Versorgungsnetz können durch Erd- oder Kurzschlüsse, Leitungsunterbrechungen oder Schaltvorgänge entstehen. Unterbrechungsfreie Stromversorgungsanlagen werden beispielsweise in Krankenhäusern eingesetzt, bei denen ein Ausfall des öffentlichen Netzes Leben und Gesundheit von Menschen gefährden kann. Auch zur Vermeidung von Sachschäden bei Netzausfällen sind unterbrechungsfreie Stromversorgungseinrichtungen zweckmäßig. Unterbrechungsfreie Stromversorgungsanlagen sind zu unterscheiden von Netzersatzanlagen, die bei längerem Netzausfall die Stromversorgung sicherstellen. Unterbrechungsfreie Stromversorgungsanlagen übernehmen bereits bei Netzausfällen von wenigen Millisekunden die Stromversorgung für eine Überbrückungszeit von einigen Minuten bis zu 15 Minuten oder mehr.

Als Energiespeicher für unterbrechungsfreie Stromversorgungsanlagen werden aufladbare Batterien verwendet. Diese Batterien sind bei manchen Anlagen Hauptenergiespeicher und bei anderen Anlagen Kurzzeitspeicher in Verbindung mit Dieselaggregaten. Im allgemeinen werden geschlossene Bleibatterien mit flüssigem Elektrolyt, verschlossene Bleibatterien mit festgelegtem Elektrolyt oder NiCd-Batterien verwendet. In einer unterbrechungsfreien Stromversorgungsanlage müssen Steuer- und Überwachungseinrichtungen vorhanden sein, mit denen Störungen, die einen Ausfall der Batterie verursachen, erkannt und die Tiefentladung oder Überladung der Batterie verhindern.

Durch die Überwachungseinrichtung muß rechtzeitig ein Ausfall der Batterie erkannt und gemeldet werden. Die Ladeeinrichtung muß die Batterie innerhalb einer bestimmten Zeit nach der Entladung wieder aufladen, wodurch die unterbrechungsfreie Stromversorgung für diese Zeit keine Energie aus der Batterie entnehmen kann.

Der Erfindung liegt das Problem zugrunde, eine unterbrechungsfreie Stromversorgung für Wechselspannungsverbraucher zu entwickeln, die ohne großen Aufwand in kurzer Zeit nach einer unter einen vorgebbaren Grenzwert abgefallenen Netzspannung die Wechselspannung für den Verbraucher erzeugt.

Das Problem wird bei einer Anordnung der eingangs beschriebenen Art erfindungsgemäß dadurch gelöst, daß ein Schalter bei einer über einer Schwelle liegenden Netzspannung das Wechselspannungsnetz zuschaltet, dem Verbraucher daß der Schalter bei einer unter der Schwelle liegenden Netzspannung das Wechselspannungsnetz von dem Verbraucher abtrennt, daß eine Polymer-Elektrolyt-Membran-Brennstoffzelle vorgesehen ist, daß sich die Brennstoffzelle bei einer über der Schwelle liegenden Netzspannung in einem Stand-By-Betrieb befindet, und daß die Brennstoffzelle bei einem Abfall der Netzspannung unter die Schwelle innerhalb einiger Millisekunden die Energieversorgung übernimmt.

Die erfindungsgemäße Anordnung arbeitet im Netz-Wechselrichter-Parallelbetrieb. Der von der Brennstoffzelle gespeiste Wechselrichter arbeitet im Bereitschaftsbetrieb. Bei einer Netzstörung durch Spannungsabfall unter die Schwelle wird der Schalter geöffnet und die Zufuhr der Reaktanden zur Brennstoffzelle schlagartig erhöht. Es hat sich gezeigt, daß die Brennstoffzelle bis zur Öffnung des Schalters den in das niederohmige, gestörte Netz fließenden erhöhten Strom aufbringen kann. Der Schalter ist nach einer Zeitspanne, die von einigen Millisekunden bis einer Zehntelsekunde reichen kann, geöffnet, so daß keine Gefahr einer Überlastung der Brennstoffzelle besteht. In Reihe mit dem Schalter ist zur Entkopplung auf der Netzanschlußseite insbesondere eine Drossel angeordnet.

Die Brennstoffzelle ist als Polymer-Elektrolyt-Membran-Brennstoffzelle ausgebildet. Eine derartige Brennstoffzelle hat eine hohe Leistungsdichte und arbeitet bei Betriebstemperaturen von 80 bis 90 °C. Diese Brennstoffzelle kann kurzzeitig von Stand-By-Betrieb auf volle Nennleistung eingestellt werden und hält für kurze Zeit einer hohen Stromentnahme Stand.

Vorzugsweise ist ein an das Netz angeschlossener Gleichrichter vorgesehen, der die Leerlaufverluste des Wechselrichters und die Blindleistung während des ungestörten Netzbetriebs deckt. Bei dieser Anordnung wird die von der Brennstoffzelle im Leerlaufbetrieb des Wechselrichters aufzubringende Leistung auf einen sehr geringen Wert reduziert, so daß der Reaktandenverbrauch entsprechend gering ist.

Bei einer zweckmäßigen Ausführungsform wird der Brennstoffzelle Wasserstoff und Sauerstoff aus Druckspeichern zugeführt, wobei die Zufuhr im Stand-By-Betrieb gedrosselt und bei Nennbetrieb durch geöffnete Ventile stark ist. Da der Reaktandenverbrauch im Stand-By-Betrieb relativ gering ist, reichen die Gasvorräte dann, wenn keine Netzstörung vorkommt, sehr lange.

Insbesondere ist der Sauerstoff in Luft enthalten, die in einem Druckluftspeicher bereitgehalten wird. Es ist also nicht notwendig, mit reinem Sauerstoff die Brennstoffzelle zu betreiben. Druckluft steht kostengünstig zur Verfügung. Sie kann auch von einem Kompressor erzeugt werden.

Es ist vorteilhaft, die Betriebsbereitschaft der Brennstoffzelle mittels die Drücke der Reaktanden messenden Drucksensoren zu überwachen, die je bei wenigstens einem Grenzwert eine Meldung abgeben, der einer Grenze des Reaktandenvorrats zugeordnet ist. Wenn die Meldung erzeugt wird, kann der Vorrat an Reaktanden ergänzt bzw. aufgefüllt werden. Es ist auch günstig, wenn der Wechselrichter mit einer Strombegrenzung ausgestattet ist.

Die Erfindung wird im folgenden anhand von in einer Zeichnung dargestellten Ausführungsbeispielen näher beschrieben, aus dem sich weitere Einzelheiten, Merkmale und Vorteile ergeben.

In der Zeichnung ist im Blockschaltbild eine unterbrechungsfreie Stromversorgung dargestellt.

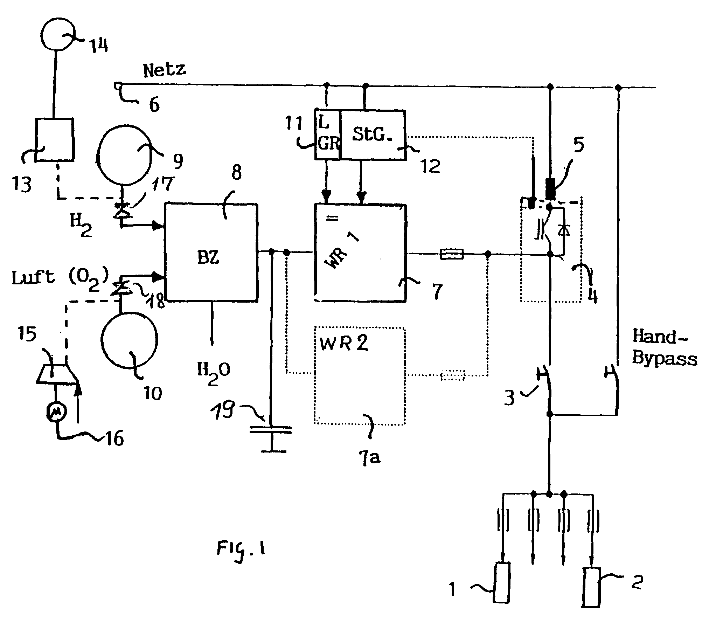

Eine Anzahl von Verbrauchern 1, 2, die in Fig. 1 durch Widerstandssymbole dargestellt sind, aber auch andere Lasten wie Motoren sein können, sind über einen gemeinsamen Schalter 3 an einen schnell arbeitenden kontaktlosen Schalter 4 angeschlossen, dem eine Drossel 5 zur Netzentkopplung vorgeschaltet ist. Die Drossel 5 ist eingangsseitig mit einem öffentlichen Versorgungsnetz 6 verbunden. In der Figur sind die Schaltungsteile einphasig dargestellt. Es kann sich hierbei aber auch um dreiphasige Verbraucher handeln, d.h. die Versorgung ist dreiphasig ausgelegt.

An den verbraucherseitigen Abgang des kontaktlosen Schalters 4 ist der Ausgang eines Wechselrichters 7 angeschlossen, dessen Eingangsgleichrichter mit den Elektroden einer Brennstoffzelle 8 verbunden ist.

Parallel zum Wechselrichter 7 können weitere Wechselrichter z.B. 7a geschaltet sein. Die Brennstoffzelle 8 ist an einen Wasserstofftank 9 und an einen Preßlufttank 10 angeschlossen. Zwischen Tank 9 und Brennstoffzelle 8 ist ein steuerbares Ventil 17 und zwischen Tank 10 und Brennstoffzelle ein steuerbares Ventil 18 angeordnet.

Vom Netz 6 wird noch ein Hilfsgleichrichter 11 gespeist, der für eine geringere Leistung als der Wechselrichter 7 ausgelegt wird, bei dem es sich um einen statischen, selbstgeführten, netzsynchronen Wechselrichter 7 handelt. Der Hilfsgleichrichter 11 deckt die Leerlaufverluste des Wechselrichters ab und speist ein Steuergerät 12, das eine Steuerspannung für den kontaktlosen Schalter 4 erzeugt. Dieser wird von der Steuerspannung des Geräts 12 bei vorhandener, ausreichend hoher Netzspannung leitend gesteuert. Bei ungestörtem Netz fließt Strom über die Drossel 5 und den Schalter 4 zu den Verbrauchern. Wenn nach einem Abfall der Netzwechselspannung, die von nicht dargestellten Diskriminatoren überwacht wird, die Verbraucher in kurzer Zeit mit Spannung versorgt werden müssen, arbeitet die Brennstoffzelle 8 im Stand-By-Betrieb, in dem sie z. B. über Bypässe zu den Ventilen 17, 18 Gas zugeführt erhält. Nach der Feststellung eines Spannungseinbruchs der Netzspannung unter eine vorgebbare Grenze wird die Brennstoffzelle 8 durch Öffnen der Ventile 17, 18 schnell auf volle Leistung gebracht, die für die Versorgung der Verbraucher 1, 2 ausreicht. Der kontaktlose Schalter 4 wird geöffnet, damit der Wechselrichter 7 nicht ins Netz 6 Energie einspeist. Bei der Brennstoffzelle 8 handelt es sich um eine Polymer-Elektrolyt-Membran-Brennstoffzelle. Es hat sich gezeigt, daß eine solche Brennstoffzelle aus dem Stand-By-Betrieb durch rasche Erhöhung der Menge der eingespeisten Reaktanden in kurzer Zeit auf Nennleistung hochgefahren werden kann. Eine kurzzeitige überlastung beispielsweise bis zur Öffnung des Schalters 4 schadet hierbei nicht. Es wird ein schnell arbeitender kontaktloser Schalter, der insbesondere mit IGBTs arbeitet, bevorzugt, um schnell die volle Wechselspannung aus dem Wechselrichter 7 und die benötigten Ströme den Verbrauchern 1, 2 zu liefern. Es können auch antiparallel geschaltete Thyristoren verwendet werden, die für manche Anwendungsfälle hinreichend schnell arbeiten. Zum Ausgang der Brennstoffzelle 8 ist ein Kondensator 19 parallel geschaltet. Der Kondensator 19 versorgt die Verbraucher während der kurzen Zeitspanne zwischen dem Abfall der Spannung und dem vollen Betrieb der Brennstoffzelle bzw. dem öffnen des Schalters 4 mit Energie.

Da der Ladegleichrichter 11 im Stand-By-Betrieb der Brennstoffzelle 8 die Leerlaufverluste des Wechselrichters 7 deckt, der im Parallelbetrieb zum Netz arbeitet, ist der im Stand-By-Betrieb von der Brennstoffzelle 8 benötigte Bedarf an Reaktanden nur gering. Bei ungestörtem Netz reicht daher der Vorrat an Wasserstoff und Druckluft sehr lange.

Der Vorrat an Reaktanden ist am jeweiligen Gasdruck in den Tanks 9, 10 feststellbar. Es ist auch zweckmäßig, mittels entsprechenden Meßgeräten die Gasdrücke zu überwachen. So wird vorzugsweise ein Druckmeßgerät verwendet, das zwei Grenzwerte hat. Das Erreichen des ersten Grenzwerts löst eine Meldung aus, die darauf hinweist, daß die Auffüllung des Vorrats an Wasserstoff oder Luft zweckmäßig ist. Bei diesem Grenzwert ist aber noch eine einwandfreie Betriebsweise der Stromversorgungseinrichtung möglich. Der zweite Grenzwert löst eine Meldung aus, die anzeigt, daß der Druck für den einwandfreien Betrieb nicht mehr ausreicht. Eine entsprechende Meldung kann den Wechselrichter auch sperren.

An den Eingang der Brennstoffzelle für das Brenngas ist weiterhin ein Reformer 13 angeschlossen, der über nicht dargestellte Dosierpumpen von einem Methanoltank 14 gespeist werden kann. Der Eingang der Brennstoffzelle für Sauerstoff ist weiterhin mit einem Kompressor 15 verbunden, der von einem Motor 16 angetrieben wird.

Die Versorgung der Brennstoffzelle 8 aus dem Wasserstofftank 8 und dem Drucklufttank 10 reicht für eine gewisse überbrückungszeit, z. B. bis zu 15 oder 30 Minuten, aus. Wenn die Netzspannung länger ausfällt, übernehmen der Methanoltank 14 und der Kompressor 15 die Versorgung mit Reaktanden. Mit Hilfe der zusätzlichen Einspeisemittel ist also eine Langzeitüberbrückung möglich. Für die Umschaltung von Kurzzeit- auf Langzeitüberbrückung sind in den entsprechenden Leitungen z. B. Magnetventile angeordnet, die z. B. als Verbraucher vom Wechselrichter 7 gespeist werden.

## Patentansprüche

1. Anordnung zur unterbrechungsfreien Energieversorgung eines elektrischen Verbrauchers (1, 2), der mit einem Wechselspannungsnetz (6) und über einen Wechselrichter (7) mit einer Brennstoffzelle (8) gekoppelt ist, wobei die Energieversorgung nach einem Ausfall des Wechselspannungsnetzes (6) durch die Brennstoffzelle (8) erfolgt, **dadurch gekennzeichnet,** daß ein Schalter (4) bei einer über einer Schwelle liegenden Netzspannung das Wechselspannungsnetz (6) zuschaltet, dem Verbraucher (12) daß der Schalter (4) bei einer unter der Schwelle liegenden Netzspannung das Wechselspannungsnetz (6) von dem Verbraucher (1, 2) abtrennt, daß eine Polymer-Elektrolyt-Membran-Brennstoffzelle (8) vorgesehen ist, daß sich die Brennstoffzelle (8) bei einer über der Schwelle liegenden Netzspannung in einem Stand-By-Betrieb befindet, und daß die Brennstoffzelle (8) bei einem Abfall der Netzspannung unter die Schwelle innerhalb einiger Millisekunden die Energieversorgung übernimmt.

2. Anordnung nach Anspruch 1, dadurch gekennzeichnet, daß der Schalter (4) in Reihe mit einer Drossel (5) geschaltet ist.

3. Anordnung nach Anspruch 1 oder 2, dadurch gekennzeichnet, daß ein an das Netz (6) angeschlossener Gleichrichter (11) vorgesehen ist, der die Leerlaufverluste des Wechselrichters (7) und die Blindleistung während des ungestörten Netzbetriebs deckt.

4. Anordnung nach einem oder mehreren der vorhergehenden Ansprüche, dadurch gekennzeichnet, daß der Brennstoffzelle (8) Wasserstoff und Sauerstoff aus Druckspeichern (9, 10) zugeführt wird.

5. Anordnung nach einem oder mehreren der vorhergehenden Ansprüche, dadurch gekennzeichnet, daß der Sauerstoff in Luft enthalten ist, die in einem Druckluftspeicher bereit gehalten wird.

6. Anordnung nach einem oder mehreren der vorhergehenden Ansprüche, dadurch gekennzeichnet, daß die Betriebsbereitschaft der Brennstoffzelle (8) mittels die Drücke der Reaktanden messenden Drucksensoren überwachbar ist, die je bei wenigstens einem Grenzwert eine Meldung abgeben, der einer Grenze des Reaktandenvorrats zugeordnet ist.

7. Anordnung nach einem oder mehreren der vorhergehenden Ansprüche, dadurch gekennzeichnet, daß die Reaktanden bei Langzeitüberbrückung von einem Kompressor (15) und aus einem Methan zu Wasserstoff reformierenden Gerät geliefert werden.

8. Anordnung nach einem oder mehreren der vorhergehenden Ansprüche, dadurch gekennzeichnet, daß zu dem Ausgang der Brennstoffzelle (8) ein Kondensator (19) parallel geschaltet ist.

## Claims

1. Arrangement for ensuring uninterrupted energy supply to an electrical consumer-device (1, 2) which is connected to an a.c. power-source (6) and, by way of an a.c. converter (7), to a fuel-cell (8), wherein in the event of a breakdown of the a.c. source (6), the supply of energy is provided by the fuel-cell (8), characterised in that a switch (4) connects the a.c. source (6) to the consumer-device (1, 2) when the source-voltage exceeds a threshold value, in that the switch (4) disconnects the a.c. source (6) from the consumer-device (1, 2) if the voltage of the a.c. source is less than the threshold value, in that a polymer-electrolyte-membrane fuel-cell (8) is provided, in that when the source-voltage exceeds the threshold value, the fuel-cell (8) is in a stand-by mode and in that if the source-voltage falls below the threshold-value, the fuel-cell (8) takes over the supply of energy within a few milli seconds.

2. Arrangement according to claim 1, characterised in that the switch (4) is connected in series with a choke (5).

3. Arrangement according to claim 1 or claim 2, characterised in that a rectifier (11) is provided which is connected to the source (6) and which during uninterrupted operation of the power-source covers idling losses of the converter (7) and blind capacity.

4. Arrangement according to one or more of the preceding claims, characterised in that hydrogen and oxygen are supplied to the fuel-cell (8) from pressurised containers (9, 10).

5. Arrangement according to one or more of the preceding claims, characterised in the oxygen is contained in air which is stored in a compressed air container.

6. Arrangement according to one or more of the preceding claims, characterised in that the operational readiness of the fuel-cell (8) can be monitored by means of pressuresensors which measure the pressures of the reactants and each of which gives a signal in response to at least one limit-value which is associated with a limit in the supply of reactants.

7. Arrangement according to one or more of the preceding claims, characterised in that in the event of a long-lasting bridging operation, the reactants are supplied by a compressor (15) and a device which reforms methane into hydrogen.

8. Arrangement according to one or more of the preceding claims, characterised in that a condenser (19) is connected is parallel with the output from the fuel-cell (8).

## Revendications

1. Dispositif assurant une alimentation ininterrompue en énergie à un consommateur d'électricité (1, 2) qui est raccordé à un réseau de courant alternatif (6) et, par l'intermédiaire d'un onduleur (7), à une pile à combustible (8), dans lequel l'alimentation en énergie est assurée, après une défaillance du réseau de courant alternatif (6), par la pile à combustible (8), caractérisé en ce qu'un commutateur (4) branche le réseau de courant alternatif (6) sur le consommateur (12) lorsque la tension du réseau est supérieure à un seuil, en ce que le commutateur (4) sépare le réseau de courant alternatif (6) du consommateur (1,2) lorsque la tension du réseau est inférieure au seuil, en ce que l'on prévoit une pile à combustible (8) à membrane électrolyte en polymère (8), en ce que la pile à combustible (8) se trouve dans en état de veille (stand-by) lorsque la tension du réseau est supérieure au seuil et en ce que, lorsque la tension du réseau tombe en dessous du seuil en quelques millisecondes, la pile à combustible (8) assure l'alimentation en énergie.

2. Dispositif selon la revendication 1, caractérisé en ce que le commutateur (4) est branché en série avec une bobine à réactance (5).

3. Dispositif selon la revendication 1 ou 2, caractérisé en ce que l'on prévoit un redresseur (11) qui est raccordé au réseau (6) et qui fournit l'énergie correspondant aux pertes à vide de l'onduleur (7) et à la puissance réactive pendant le fonctionnement normal sur le réseau.

4. Dispositif selon au moins une des revendications précédentes, caractérisé en ce que la pile à combustible (8) est alimentée en hydrogène et en oxygène à partir de réservoirs sous pression (9, 10).

5. Dispositif selon au moins une des revendications précédentes, caractérisé en ce que l'oxygène est contenu dans de l'air qui est conservé dans un réservoir sous pression.

6. Dispositif selon au moins une des revendications précédentes, caractérisé en ce que la capacité de fonctionnement en instantané de la pile à combustible (8) peut être contrôlée au moyen de capteurs de pression qui mesurent les pressions des réactants et qui fournissent, à chaque fois pour au moins une valeur limite, une information qui est associée à une limite de la réserve en réactant.

7. Dispositif selon au moins une des revendications précédentes, caractérisé en ce que, pour les fonctionnements transitoires de longue durée, les réactants sont fournis par un compresseur (15) et à partir d'un appareil qui réalise un reformage du méthane en hydrogène.

8. Dispositif selon au moins une des revendications précédentes, caractérisé en ce qu'un condensateur (19) est branché en parallèle sur la sortie de la pile à combustible (8).
